# EUROPÄISCHE PATENTANMELDUNG

(11) **EP 4 636 643 A1**
(43) Veröffentlichungstag der Anmeldung: **22.10.2025**
(21) Anmeldenummer: 24170529.2
(22) Anmeldetag: 16.04.2024
(51) Int. Cl.: G06K 7/10

(54) **KOMBINIERTER LINIEN UND RASTER BARCODESCANNER MIT "CODE OUT OF SIGHT" FUNKTION**

(71) Anmelder: SICK AG, 79183 Waldkirch (DE)
(72) Erfinder: Behrens, Andreas, 40227 Düsseldorf (DE); Fischer, Jonas, 79369 Wyhl (DE)

(57) **Zusammenfassung**

Spiegelrad für einen optoelektronischen Codeleser, insbesondere für einen Barcodeleser, mit Spiegelflächen, wobei N der Spiegelflächen zueinander gleich ausgerichtet sind, und K der Spiegelflächen zueinander um einen Kippwinkel α gegen die gleich ausgerichteten Spiegelflächen verkippt sind, und L der Spiegelflächen um einen Kippwinkel β gegen die gleich ausgerichteten Spiegelflächen verkippt sind, wobei die Richtung der Verkippung durch den Kippwinkel β entgegengesetzt zur Richtung der Verkippung durch den Kippwinkel α eingerichtet ist.

## Beschreibung

Die vorliegende Erfindung betrifft das Gebiet der Codeleser, insbesondere der laserbasierten Barcodescanner. Codeleser sind von Supermarktkassen, zur automatischen Paketidentifikation, zur Sortierung von Postsendungen, zur Gepäckabfertigung an Flughäfen und aus anderen Logistikanwendungen bekannt. In einem Codescanner wird ein Lesestrahl mittels eines Drehspiegels oder eines Polygonspiegelrads quer über den Code geführt. Bei den laserbasierten Barcodescannern gibt es zwei unterschiedliche Barcodelesevarianten, einen Linienscanner und einen Rasterscanner.

Barcodescanner weisen häufig das spezielle Aufbauprinzip eines Polygonscanners auf. Denn für einen Barcodescanner bedeutet es keinen Nachteil auf den typischen großen Erfassungswinkel von bis zu 360° eines Laserscanners mit nur einer Spiegelfläche, zugunsten einer pro Umdrehung erhöhten Abtastrate durch mehrere Spiegelfacetten eines Polygonspiegelrads oder kurz Polygonrad, zu verzichten. D.h. der Drehspiegel eines Polygonscanners ist dabei gegenüber dem Drehspiegel eines Laserscanners durch einen Drehspiegel mit mehreren Spiegelfacetten ersetzt, so dass nur ein Teilausschnitt der Überwachungsebene erfasst wird, dieser aber mehrfach je Umdrehung entsprechend der Anzahl der Spiegelfacetten. Mit anderen Worten, der Scanwinkelbereich der jeweiligen Überwachungs- oder Abtastebene wird auf den Winkelanteil der Spiegelfacette von typischerweise weniger als 100° beschränkt.

In der Variante eines Linienscanners sind die Spiegelfacetten des Polygonrads alle gleich ausgerichtet, so dass bei Drehung des Polygonrads der Lichtstrahl immer dieselbe Richtungsablenkung erfährt. Damit erzeugt jede Spiegelfacette eine Linie und durch dieselbe Ausrichtung der Spiegelfacetten zueinander liegen alle Linien der jeweiligen Spiegelfacetten bei Drehung des Polygonrads aufeinander. Ein Code wird deshalb bei Drehung des Polygonrads jeweils entlang derselben Linie abgetastet.

In der Variante eines Rasterscanners sind die Spiegelfacetten des Polygonrads unterschiedlich zueinander ausgerichtet, so dass bei Drehung des Polygonrads der Lichtstrahl je nach Ausrichtung der jeweiligen Spiegelfläche oder der jeweiligen Spiegelfacette eine andere Richtungsablenkung erfährt. Beispielsweise können die jeweiligen Spiegelfacetten um einen jeweiligen Winkel zueinander verkippt sein, so dass die jeweiligen Linien der jeweiligen Spiegelfacetten nicht mehr aufeinander, sondern zueinander versetzte Linien erzeugen. Bei gleichem jeweiligen Winkelversatz der Spiegelfacetten zueinander entstehen auf diese Weise gleich weit zueinander beabstandete und parallel zueinander ausgerichtete Linien, die ein sogenanntes Raster bilden, weshalb man auch von einem Rasterscanner spricht. Beliebige Kombinationen des Verkippens der jeweiligen Spiegelfacetten sind denkbar. Ein Code wird bei Drehung des Polygonrads deshalb jeweils entlang unterschiedlicher, parallel zueinander verlaufender Linie abgetastet.

Ein Vorteil des Rasterscanners liegt darin, dass eine größere Verkippung der Spiegelfacetten des Polygonrads die Wirkung hat, dass der Abstand zwischen den jeweiligen Linien größer wird und damit auch der Scanbereich des Rasterscanners im Vergleich zu einem Linienscanner erweitert ist.

Dies hat den Nachteil, dass pro Umdrehung des Polygonrads, der Codebereich weniger oft von einer Linie erfasst wird, weshalb die maximale Geschwindigkeit, mit der beispielsweise ein Barcode von einem Rasterscanner erkannt wird, kleiner ist als die maximale Scan Geschwindigkeit eines Linienscanners, dafür aber ein größerer Scanbereich verfügbar ist, der Lesebereich sozusagen erweitert ist.

Die Größe des Scanbereichs erlaubt eine höhere Toleranz in der Positionierung des zu lesenden Codes, d.h. beim Anbringen des Barcodes auf einem Paket. Dies hat den Vorteil, dass Fehlsortierungen verringert werden. Zu diesem Zweck erfassen beispielsweise Kamera basierte Codeleser zusätzlich die Position des Codes auf dem Objekt.

Um bei einer schnellen Sortieranwendung die Codes schnell erfassen zu können und eine Fehlsortierung aufgrund von beispielsweise unzulänglich auf den Paketen positionierten Codes zu vermeiden, sind bisher Kombinationen aus Linienscanner und Rasterscanner und/oder Kamera basierten Codelesern notwendig, wobei letztere in der Anschaffung teurer sind.

Es ist daher eine Aufgabe der Erfindung einen optoelektronischen Codeleser bereitzustellen, welcher insbesondere beim Sortieren von Objekten sowohl als Linienscanner als auch als Rasterscanner einsetzbar ist, so dass mit dem optoelektronischen Codeleser beispielsweise auch die Positionierung von Code in einem vordefinierten Bereich überprüft werden kann.

Die Aufgabe wird gelöst durch das Spiegelrad nach Anspruch 1, durch den optoelektronischen Codeleser nach Anspruch 5, die Bedieneinheit nach Anspruch 8, das System nach Anspruch 9 und das Verfahren nach Anspruch 10. Weitere Ausführungsformen sind Gegenstand der abhängigen Ansprüche.

Das erfindungsgemäße Spiegelrad für einen optoelektronischen Codeleser, insbesondere für einen Barcodeleser, weist N zueinander gleich ausgerichtete Spiegelflächen auf und K Spiegelflächen, die zueinander um einen Kippwinkel α gegen die gleich ausgerichteten Spiegelflächen verkippt sind, und L Spiegelflächen, die um einen Kippwinkel β gegen die gleich ausgerichteten Spiegelflächen verkippt sind, wobei die Richtung der Verkippung durch den Kippwinkel β entgegengesetzt zur Richtung der Verkippung durch den Kippwinkel α eingerichtet ist.

Unter einem Spiegelrad ist vorliegend ein Polygonrad mit Spiegelflächen oder auch Spiegelfacetten zu verstehen. Dabei sind die Spiegelfacetten als Spiegelflächen ausgebildet, die um den Umfang des Polygonrads nebeneinander positioniert sind. Unter einer Spiegelfläche ist vorliegend, insbesondere aber nicht ausschließlich eine ebene Spiegelfläche zu stehen, d.h. eine glatte Fläche an der der größte Teil des auf die Fläche auftreffenden Lichts einer Lichtquelle, insbesondere eines Lasers, reflektiert wird. Die Ausrichtung der N Spiegelflächen am Polygonrad ist so ausgestaltet, dass wenn man sich das Polygonrad als einen Zylinder vorstellt, die N Spiegelflächen auf dessen Mantelfläche angeordnet sind und eine Flächennormale einer jeweiligen Spiegelfläche senkrecht zur Zylinderachse verläuft. Demgegenüber ist die Ausrichtung der K bzw. L Spiegelflächen, um einen Winkel α bzw. β gegen die Zylinderachse verkippt, d.h. gegen die N gleich ausgerichteten Spiegelflächen verkippt angeordnet. Mit anderen Worten, eine Flächennormale einer K bzw. L Spiegelfläche wäre in Richtung der Zylinderachse des Polygonrads um 90 Grad plus oder minus einen Kippwinkel α bzw. β gegen die Richtung der Zylinderachse verkippt angeordnet ist. Beispielsweise wäre eine Flächennormale einer K Spiegelfläche um α = 2 Grad, d.h. um 92 Grad gegenüber der Zylinderachse verkippt angeordnet und eine Flächennormale einer L Spiegelfläche um β = 3 Grad, d.h. um 87 Grad gegenüber der Zylinderachse verkippt angeordnet, so dass die Richtung der Verkippung durch den Kippwinkel β entgegengesetzt zur Richtung der Verkippung durch den Kippwinkel α eingerichtet ist. Anders ausgedrückt, eine als Ebene ausgebildete K Spiegelfläche wäre um einen Winkel α = 2 Grad gegenüber der Zylinderachse verkippt und eine als Ebene ausgebildete L Spiegelfläche wäre um einen Winkel β = - 3 Grad gegenüber der Zylinderachse verkippt.

Das erfindungsgemäße Spiegelrad hat den Vorteil, die Funktionalitäten von Linienscanner und Rasterscanner in sich zu vereinen. Damit ist insbesondere das schnelle Auslesen eines Codes durch einen Linienscanner und das flächigere Auslesen bzw. Abtasten eines Bereichs durch einen Rasterscanner gemeint, d.h. die Erweiterung des Lesebereichs des Codelesers. Denn durch die N Siegelflächen wird eine erste schnelle Scanlinie zum N-maligen Auslesen pro Drehung des Spiegelrads erzeugt, wobei durch die K bzw. L Spiegelflächen eine zweite und dazu beanstandete dritte langsame Scanlinie zum Auslesen eines Randbereiches des zu lesenden Codes erzeugt wird, so dass zusätzlich zum Auslesen des Codes auch eine Positionierung des Codes in einem definierten Bereich überprüft werden kann.

Der erweiterte Lesebereich ergibt sich durch die zueinander entgegengesetzte Verkippung der K und L Spiegelflächen. Dies erzeugt eine jeweilige zweite und dritte Scanlinie zusätzlich zu einer ersten Scanlinie, wobei die zweite und dritte Scanlinie parallel und auf unterschiedlichen Seiten der durch die N-Spiegelflächen erzeugte ersten Scanlinie verlaufen.

Der erweiterte Lesebereich, oder der Erfassungsbereich kann auf einfache Weise durch Verkleinern oder Vergrößern der Kippwinkel α bzw. β verkleinert oder vergrößert werden. D.h. der erweiterte Lesebereich kann durch Verkippung der K und L Spiegelflächen vordefiniert werden.

Damit kann die Verwendung unterschiedlicher Geräte und der damit verbundene Mehraufwand, auf die Verwendung eines einzelnen mit dem erfindungsgemäßen Spiegelrad ausgestatten Codelesers bei Sortierung von Objekten reduziert werden.

In einer besonders bevorzugten Ausführungsform des Spiegelrads entspricht die Verkippung der K Spiegelflächen um den Kippwinkel α, der Verkippung der L Spiegelflächen um den Kippwinkel β in entgegengesetzter Richtung. Mit anderen Worten, die als Ebene ausgebildete K Spiegelfläche wäre um einen Winkel α = 2 Grad gegenüber der Zylinderachse verkippt und eine als Ebene ausgebildete L Spiegelfläche wäre um einen Winkel β = - 2 Grad gegenüber der Zylinderachse verkippt.

Dies hat den Vorteil, dass die zweite und dritte Scanlinie jeweils symmetrisch zur ersten Scanlinie beabstandet sind. Die zweite Scanlinie ist beispielsweise um einen Abstand A zu der ersten Scanlinie parallel versetzt angeordnet und die dritte Scanlinie um einen Abstand - A zu der ersten Scanlinie parallel versetzt angeordnet. Sobald die zweite oder dritte Scanlinie keinen Code mehr erkennt, kann damit eine Abweichung der Positionierung des Codes außerhalb des in dieser Ausführung symmetrisch erweiterten Lesebereichs automatisch erkannt werden.

In einer besonders bevorzugten Ausführungsform des Spiegelrads umfasst das Spiegelrad N = 8 Spiegelflächen und jeweils eine, d.h. K = 1 und L = 1, Spiegelfläche, die zu den N Spiegelflächen verkippt angeordnet ist.

Dies hat den Vorteil, dass die erste Scanlinie mit einer hohen, d.h. 8-fachen Abtastung pro Umdrehung, einen Code erkennt und ein erweiterter Lesebereich zumindest ein Mal pro Umdrehung erfasst wird.

In einer Ausführungsform des Spiegelrads ist die K'te Spiegelfläche gegenüberliegend zur L'ten Spiegelfläche im Spiegelrad angeordnet ist. Mit anderen Worten die K'te Spiegelfläche ist auf der Mantelfläche des zylinderförmigen Spiegelrads gegenüberliegend zur L'ten Spiegelfläche angeordnet. Alternativ dazu kann die K'te Spiegelfläche neben der L'ten Spiegelfläche im Spiegelrad angeordnet ist. Diese Ausführungsformen bezieht sich insbesondere auf K = L = 1, 3 oder 5 Spiegelflächen, so dass sich eine symmetrische Anordnung der K bzw. L Spiegelflächen zueinander ergibt.

Die Erfindung betrifft ferner einen optoelektronischen Codeleser, insbesondere einen Barcodeleser, mit einer Lichtquelle, einem Lichtempfänger, einer Verarbeitungseinheit und einem Spiegelrad. Das Spiegelrad in der Ausführungsform des Anspruchs 1 weist die N zueinander gleich ausgerichteten Spiegelflächen auf, und die K zueinander um einen Kippwinkel α gegen die gleich ausgerichteten Spiegelflächen verkippen Spiegelflächen, und die L Spiegelflächen um einen Kippwinkel β gegen die gleich ausgerichteten Spiegelflächen verkippten Spiegelflächen, wobei die Richtung der Verkippung durch den Kippwinkel β entgegengesetzt zur Richtung der Verkippung durch den Kippwinkel α eingerichtet ist.

Der erfindungsgemäße optoelektronische Codeleser kombiniert damit die Vorteile eines Linienscanners, d.h. das schnelle Auslesen von Code entlang einer Scanrichtung, mit den Vorteilen eines Rasterscanners, d.h. dem Auslesen von Code, der über einen Bereich angeordnet ist.

Die Verarbeitungseinheit dient zum Verarbeiten der vom Lichtempfänger erhaltenen Informationen. Die Verarbeitungseinheit kann in einer Ausführung auch zum Steuern der Lichtquelle weiter ausgebildet sein. Das von der Lichtquelle ausgesendete Licht wird durch eine Linse kolimiert und durch einen Umlenkspiegel in Richtung des Spiegelrads abgelenkt. Dort trifft es auf die Spiegelflächen, bzw. die Spiegelfacetten, die als ebene Flächen oder auch als Freiformflächen ausgestaltet sein können, um beispielsweise eine optische Verzerrung zu minimieren. Die Spiegelflächen reflektieren das ausgesendete Licht durch ein Austrittsfenster auf einen Code. Das vom Code reflektierte Licht gelangt durch das Austrittsfenster zurück auf das Spiegelrad und wird in Richtung eines Lichtempfängers abgelenkt. Der Lichtempfänger wandelt die empfangenen optischen Intensitäten in elektrische Informationen um und leitet diese dann an die Verarbeitungseinheit weiter.

In einer Ausführungsform des optoelektronischen Codelesers umfasst die Verarbeitungseinheit eine Erkennungseinheit, die eingerichtet ist festzustellen, ob eine zweite und/oder eine dritte Scanlinie Code erfasst, wobei die zweite Scanlinie durch die K Spiegelflächen der um den Kippwinkel α verkippten Spiegelflächen erzeugt ist und die dritte Scanlinie durch die L Spiegelflächen der um den Kippwinkel β verkippten Spiegelflächen.

In dieser Ausführungsform sind die zweite und dritte Scanlinie bevorzugt symmetrisch zur ersten Scanlinie beabstandet. D.h. die erste Scanlinie liest beispielsweise einen rechteckförmigen Barcode mittig aus und die zweite und dritte Scanlinie erfassen die jeweiligen Ränder des rechteckförmigen Barcodes. In dieser Ausführung kann eine Abweichung der Positionierung des Codes i.S. einer "O*ut of Sight"* Funktion dadurch erkannt werden, dass die zweite oder dritte Scanlinie aufgrund der Fehlpositionierung des Barcodes keinen Code mehr erfassen können. Dies ist beispielsweise dann der Fall, wenn der rechteckförmig ausgebildete Barcode mit seinem Rand außerhalb des insbesondere rechteckförmigen Lesebereichs des optoelektronischen Codelesers ist. Dies ist dann der Fall, wenn die Position des erweiterten Lesebereichs nicht mit der Position des Codes auf dem Objekt übereinstimmt, beispielswiese weil eine Sortieranlage falsch eingestellt wurde, indem z.B. eine vorherige Anbauposition des Codelesers von einer ersten Anwendung nicht auf eine neue Anwendung neu eingestellt wurde.

Die Erkennungseinheit ist daher eingerichtet zu unterscheiden, ob es sich bei den durch die zweite und/oder dritte Scanlinie erfassten Daten um Code handelt oder um andere Daten. Dabei kann die Erkennungseinheit die Daten der zweiten und dritten Scanlinie beispielsweise mit den Daten der ersten Scanlinie vergleichen und deren Ähnlichkeit zueinander überprüfen. Andere Daten können durch beliebige Reflexionen erzeugt werden, wie z.B. solcher, die sich aufgrund der Oberfläche ergeben, auf der der tatsächliche Code aufgebracht ist.

In einer besonders bevorzugten Ausführungsform des optoelektronischen Codelesers ist die Erkennungseinheit eingerichtet ein Signal bereitzustellen, wobei das Signal anzeigt, ob die zweite und/oder die dritte Scanlinie Code erfasst.

Das Signal kann als ein binäres Signal ausgebildet sein, indem "1" bedeutet, dass Code erkannt wurde und "0" bedeutet, dass kein Code erkannt wurde. Beispielsweise könnte die Ausgabe von "11" bedeuten, dass jeweils Code erkannt wurde und "01", dass lediglich die dritte Scanlinie Code erkannt hat. Hat lediglich eine der beiden, d.h. der zweiten oder dritten Scanlinie Code erkannt, so ist der Code zumindest teilweise außerhalb des erweiterten Lesebereichs. Je nachdem welche Scanlinie Code erkennt, kann festgestellt werden in welcher Richtung der Code außerhalb des erweiterten Lesebereichs liegt.

Die Erfindung betrifft ferner eine Bedieneinheit, insbesondere zur Verwendung in einer Sortieranlage, wobei die Bedieneinheit eingerichtet ist ein Signal einer Erkennungseinheit eines optoelektronischen Codelesers zu empfangen, wobei das Signal anzeigt, ob eine zweite und/oder eine dritte Scanlinie Code erfasst wurde, wobei die zweite Scanlinie durch K Spiegelflächen der um einen Kippwinkel α verkippten Spiegelflächen des Spiegelrads des optoelektronischen Codelesers erzeugt ist und die dritte Scanlinie durch L Spiegelflächen der um einen Kippwinkel β verkippten Spiegelflächen des Spiegelrads, und die Bedieneinheit ferner eingerichtet ist, insbesondere auf einem Bildschirm, anzuzeigen, ob der Code innerhalb eines vorgegebenen Bereichs positioniert ist, indem eine Auswerteeinheit der Bedieneinheit auswertet, ob die zweite und/oder die dritte Scanlinie Code erfasst.

Dies ermöglicht es schnell festzustellen, ob ein vordefinierter Lesebereich von Codes in Bezug auf den Scanbereich eines Codelesers richtig eingestellt ist. Beispielswese lässt sich bei einem Sortiervorgang von Paketen rechtzeitig erkennen, ob aufeinanderfolgende Codes von Paketen aus dem vordefinierten Lesebereich "herauswandern", weil die Position des vordefinierten Code Lesebereichs einer Sortieranlage falsch eingestellt ist. Die Auswerteeinheit wertet aus, ob die zweite oder die dritte Scanlinie Code erfasst, so dass auf einem Bildschirm angezeigt werden kann, ob der vordefinierte Lesebereich beispielsweise zu tief oder zu hoch eingestellt ist in Bezug auf die zweite und dritte Scanlinie. Bei einer solchen Fehlpositionierung kann die Auswerteeinheit nicht nur einen Hinweise liefern, dass sich der Code 12 außerhalb des vorgegebenen Bereichs 16 befindet, i.S. einer "O*ut of Sight"* Funktion, sondern zusätzlich auch einen Korrekturhinweise, der durch einen Pfeil auf dem Bildschirm der Bedieneinheit angedeutet sein kann. Der Sortiervorgang der Sortieranlage kann deshalb mit geringem Aufwand korrigiert werden, indem der vordefinierten Lesebereich der Sortieranlage mit dem erweiterten Lesebereich des Codelesers in Übereinstimmung gebracht wird, wobei der Pfeil auf dem Bildschirm anzeigt in welche Richtung und bevorzugt auch um welchen Betrag beispielsweise die Montageposition des Codelesers korrigiert werden muss. Der Betrag der Fehlpositionierung lässt sich aus der Dimension des erweiterten Lesebereichs des Codelesers bestimmen, welcher sich wiederum aus den Kippwinkeln α und β geometrisch berechnen lässt.

Die Erfindung betrifft ferner ein System zum Sortieren von Objekten aufweisend den optoelektronischen Codeleser und die Bedieneinheit. Das System kann durch eine Sortieranlage ausgebildet sein. Die Sortieranlage kann dann vorteilhaft lediglich mit dem erfindungsgemäßen optoelektronischen Codeleser ausgestattet sein, so dass weitere Raster- oder Linienscanner oder zur Positionserfassung von Codebereichen verwendete kamerabasierte Sensoren nicht mehr notwendig sind, was die Komplexität der Anlage reduziert.

Ferner betrifft die Erfindung ein Verfahren zum Herstellen eines Spiegelrads für einen optoelektronischen Codeleser, aufweisend die folgenden Schritte:
- Bereitstellen eines Spiegelrads mit N Spiegelflächen, die zueinander gleich ausgerichtet sind;
- Verkippen von K weiteren Spiegelflächen des Spiegelrads um einen Kippwinkel α gegen die gleich ausgerichteten N Spiegelflächen;
- Verkippen von L weiteren Spiegelflächen des Spiegelrads um einen Kippwinkel β gegen die gleich ausgerichteten Spiegelflächen, wobei die Richtung der Verkippung durch den Kippwinkel β entgegengesetzt zur Richtung der Verkippung durch den Kippwinkel α erfolgt.

Weitere bevorzugte Ausgestaltungen ergeben sich aus der nachfolgenden Beschreibung der Ausführungsbeispiele in Zusammenhang mit den Figuren und deren Beschreibung. Gleiche Bauteile werden im Wesentlichen durch gleiche Bezugszeichen gekennzeichnet, falls dies nicht anders beschrieben wird oder sich nicht anders aus dem Kontext ergibt.
Fig. 1 zeigt eine schematische Darstellung einer Sortieranlage als eine Ausführungsform des erfindungsgemäßen Systems.
Fig. 2 zeigt eine schematische Darstellung des erfindungsgemäßen optoelektronischen Codelesers mit dem erfindungsgemäßen Spiegelrad.
Figs. 3a, 3b zeigen jeweils eine schematische Darstellung des erfindungsgemäßen Spiegelrads in einer ersten (Fig. 3a) und einer zweiten (Fig. 3b) Drehposition.
Figs. 4a, 4b und 4c zeigen jeweils erste, zweite und dritte Scanlinien in Bezug auf die Positionierung von einem Barcode.
Fig. 5 zeigt eine Ausführungsform des Systems aufweisend eine Bedieneinheit mit einer Auswerteeinheit und einem Display zum Anzeigen einer Justage Korrekturmaßnahme des ebenfalls dargestellten Codelesers, welcher einen Barcode auf einem Paket erkennen soll.

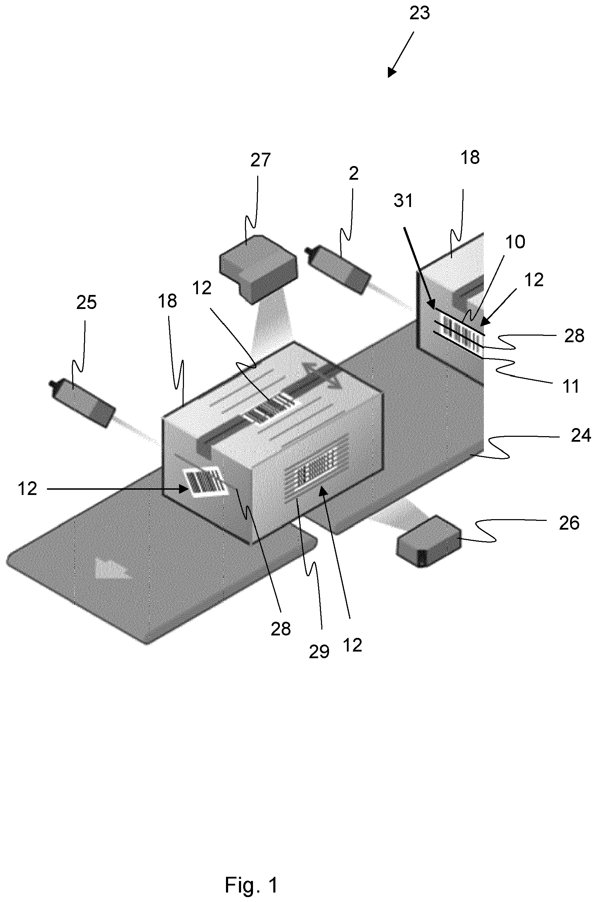

In Fig. 1 ist eine Sortieranlage 23 zum Sortieren von Paketen 18 schematische dargestellt. Dabei sind die Pakte 18 auf einem Förderband 24 positioniert und laufen der Reihe nach an drei um das Förderband 24 angeordneten Codelesegeräten vorbei, die den auf den Paketen 18 angebrachten Code 12 einlesen bzw. scannen. Zum Vergleich wird ein erstes, nur teilweise in Fig. 1 sichtbares Paket 18, auf dessen Vorderseite ein Code 12 angebracht ist, durch einen erfindungsgemäßen Codeleser 2 gescannt. Der Code 12 wird mittig durch eine erste Scanlinie 28 erfasst und eine zweite 10 und dritte 11 Scanlinie erfassen den oberen und unteren Bereich des Codes 12. Damit ist der Code 12 im erweiterten Lesebereich 30 des Codelesers 2 ideal positioniert. Ein zweites Paket 18 wird im Vergleich dazu durch die drei weiteren Codelesegeräte 25, 26, 27 erfasst. Ein Linienscanner 25 erkennt den schräg auf der Vorderseite des Pakets 18 positionierten Code 12 mit seiner ersten Scanlinie 28. Ein seitlich auf dem Paket 18 angebrachter Code 12 wird durch einen Rasterscanner 26 mittels der Rasterlinien 29 flächig erfasst. Ein drittes Codelesegerät 27 oszilliert oberhalb des Pakets 18 hin und her, so dass durch die Hin- und Her-bewegung die erste Scanlinie 28 einen Bereich auf der Oberseite des Pakets 18 erfasst und den dort aufgebrachten Code 12 erkennt. Der erfindungsgemäße Codeleser 2 wäre in der Lage die Funktionalität der drei unterschiedlichen Codelesegeräte in sich abzubilden. Demnach müssten nicht drei unterschiedliche Lesegeräte in der Sortieranlage eingesetzt werden, wodurch sich der Aufbau der Anlage vereinfacht.

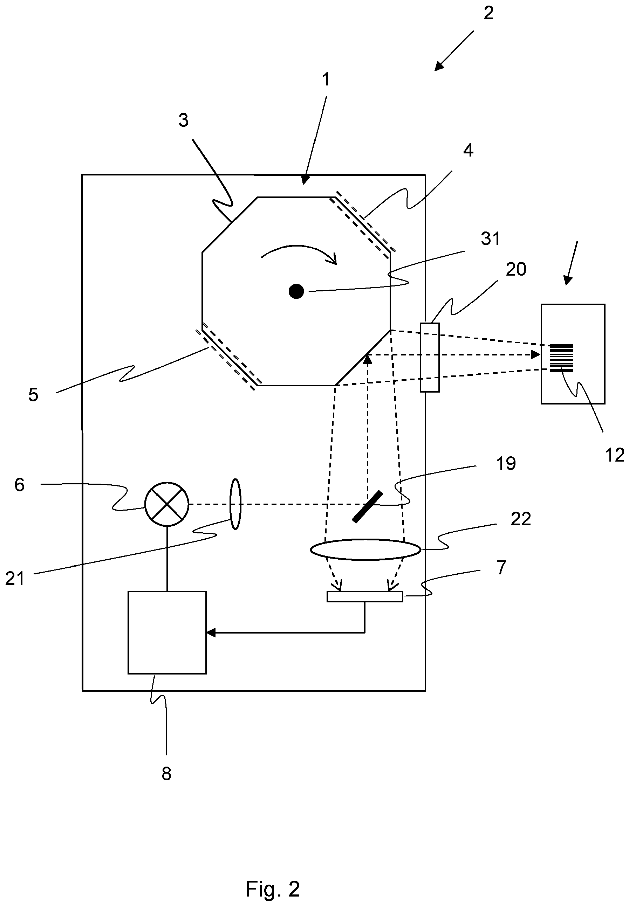

In Fig. 2 ist eine schematische Darstellung des erfindungsgemäßen optoelektronischen Codelesers 2 mit dem erfindungsgemäßen Spiegelrad 1 gezeigt. Das Spiegelrad 1 ist als Polygonrad 1 mit acht Spiegelflächen 3, 4, 5 ausgebildet, wobei N = 6 Spiegelflächen 3 zueinander gleich ausgerichtet entlang der Mantelfläche des Polygonrads 1 positioniert sind. Eine um den Kippwinkel α verkippte K'te Spiegelfläche 4 ist gegenüber einer um den entgegengesetzten Kippwinkel β verkippte L'te Spiegelfläche 5 positioniert angeordnet, was jeweils durch parallel zueinander verlaufende doppelt gestrichelt dargestellte Linien angedeutet sein soll. Das Spiegelrad 1 dreht sich um eine Drehachse 31, so dass eine jeweilige Spiegelfläche 3, 4, 5 einen Lichtstrahl der Lichtquelle 6 durch ein Austrittsfenster 20 in Richtung eines Codes 12 ablenkt. Dabei entsteht eine erste Scanlinie 28, welche durch Ablenkung des Lichtstrahl durch die N-Spiegelflächen 3 hervorgerufen wird, so wie eine zweite 10 und dritte 11 Scanlinie, welche durch Ablenkung des Lichtstrahls durch die K'te 4 und L'te 5 Spiegelfläche hervorgerufen wird. Das vom Code 12 reflektierte Licht wird auf das Spiegelrad 1 zurück reflektiert und über eine Linse 22 auf den Lichtempfänger 7 abgebildet. Der Lichtempfänger 7 wandelt die Intensität des Lichts in elektrische Spannungen um, welche an die Verarbeitungseinheit 8 weitergeleitet werden. Die Verarbeitungseinheit 8 dient zum Verarbeiten der vom Lichtempfänger erhaltenen Spannungen. Die Verarbeitungseinheit 8 ist in der in Fig. 2 gezeigten Ausführungsform auch zum Steuern der Lichtquelle 6 ausgebildet. Das von der Lichtquelle 6 ausgesendete Licht wird durch eine Linse 21 kolimiert und durch einen Umlenkspiegel 19 in Richtung des Spiegelrads 1 abgelenkt. Dort trifft es auf die Spiegelflächen 3, 4, 5 bzw. die Spiegelfacetten, die als ebene Flächen oder auch als Freiformflächen ausgestaltet sein können, um beispielsweise eine optische Verzerrung zu minimieren.

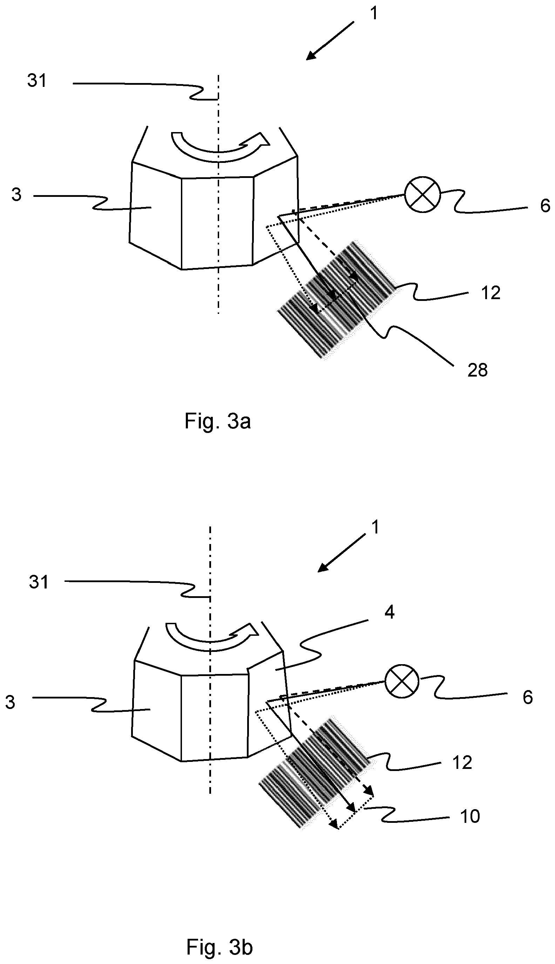

In Figs. 3a, 3b sind jeweils schematische Darstellungen des erfindungsgemäßen Spiegelrads 1 in einer ersten (Fig. 3a) und einer zweiten (Fig. 3b) Drehposition des Spiegelrads 1 gezeigt. In der in Fig. 3a gezeigten ersten Position sind drei der N gleich ausgerichteten Spiegelflächen 3 skizziert. Dabei trifft das Licht der Lichtquelle 6 auf eine N'te der drei Spiegelflächen 3 und wird von dieser in Richtung des ebenfalls in Fig. 3a skizierten Codes 12 abgelenkt. Das Spiegelrad 1 ist um eine Drehachse 31 drehbar gelagert. Bei Drehung des Spiegelrads 1 um die Drehachse 31 wird auf die N'te Spiegelfläche fallendes Licht der Lichtquelle 6 zu einer ersten Scanlinie 28 auf dem Code 12 abgelenkt. Dies soll durch die, von der Lichtquelle 6 ausgehenden unterschiedlich gestrichelt dargestellten optischen Pfade, skizziert sein. Dabei entspricht ein jeweiliger optischer Pfad der Ablenkung des Lichtstrahls an einer jeweiligen Drehposition des Spiegelrads 1. Zur Vereinfachung sind nur drei Strahlablenkungen an einer jeweiligen Drehpositionen des Spiegelrads 1 dargestellt. In Fig. 3b ist eine der K'ten Spiegelflächen 4 dargestellt, welche um einen Kippwinkel α gegen die Drehachse 31 des Spiegelrads 1 verkippt ist. Dadurch wird bei Drehung des Spiegelrads 1 eine zweite Scanlinie 10 oberhalb des Codes 12 erzeugt. In der in Fig. 3b gezeigten Ausführungsform, wäre der Code 12 somit außerhalb des durch die zweite Scanlinie 10 begrenzenten Sichtbereichs positioniert.

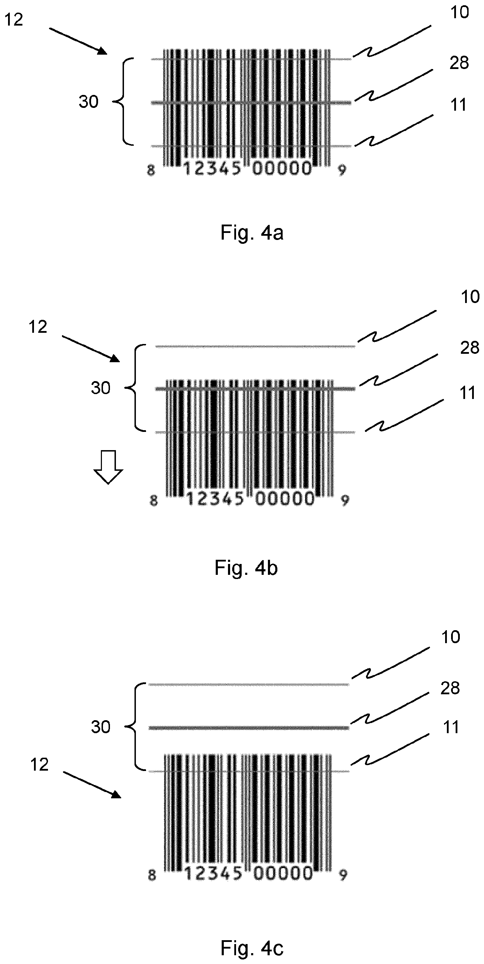

In Figs 4a, 4b und 4c sind jeweils erste 28, zweite 10 und dritte 11 Scanlinien in Bezug auf die Positionierung von einem Barcode 12 gezeigt. In Fig. 4a ist der Code mittig in dem durch die zweite 10 und dritte 11 Scanlinie begrenzten erweiterten Lesebereich 30 positioniert. In Fig. 4b ist der Code 12 unterhalb des erweiterten Lesebereichs 30 angeordnet, so dass kein Code 12 durch die zweite Scanlinie 10 erkannt wird. In diesem Fall müsste beispielsweise die Montageposition oder die Ausrichtung des optoelektronischen Codelesers 2 nach unten korrigiert werden, wie dies durch den Pfeil in Fig. 4b angedeutet sein soll. In Fig. 4c ist der Code 12 noch weiter außerhalb des Lesebereichs 30, so dass auch die erste Scanlinie 28 keine Code 12 mehr erfassen kann. Entsprechend wäre eine noch größere Neupositionierung bzw. Neuausrichtung des Codelesers 2 notwendig.

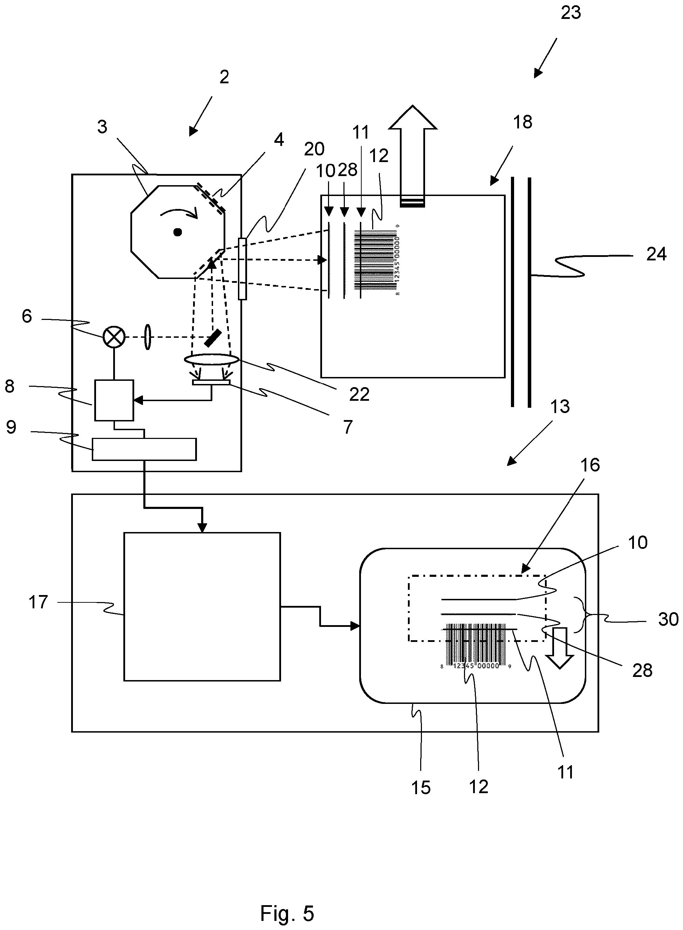

In Fig. 5 ist eine Ausführungsform des Systems, aufweisend eine Bedieneinheit 13 mit einer Auswerteeinheit 17 und einem Display 15 zum Anzeigen einer Justage Korrekturmaßnahme des ebenfalls in Fig. 5 dargestellten Codelesers 2, welcher einen Barcode 12 auf einem Paket 18 erkennen soll, gezeigt. Ein Paket 18 wird über eine Förderband 24 der in Fig. 5 angedeuteten Sortieranlage 23 transportiert und passiert dabei den vorgegebenen Bereich 16, welcher den erweiterten Lesebereich 30 des Codelesers 2 umfasst. Ist in der in Fig. 5 gezeigten Ausführungsform der Code 12 innerhalb des vorgegebenen Bereichs 16 positioniert, wird der Code durch die Scanlinien 28, 10, 11 erfasst. Der Codeleser 2 weist in dieser Ausführungsform zusätzlich eine Erkennungseinheit 9 auf, die eingerichtet ist festzustellen, ob die zweite 10 und/oder dritte 11 Scanlinie Code 12 erfasst. Die Bedieneinheit 13 ist eingerichtet das von der Auswerteeinheit 17 erzeugte Signal zu empfangen und auszuwerten. Dabei umfasst die Bedieneinheit 13 ein Display 15, um beispielsweise wie in Fig. 5 gestrichelt skizziert, den vordefinierten Bereich 16 darzustellen. Der vordefinierte Bereich 16 entspricht beispielsweise einem Bereich der basierend auf der Justage des Codelesers 2 zum Scannen von Code 12 mit der Sortieranlage 23 Justage bedingt vorgesehen ist. Mit anderen Worten, ein Paket 18, welches einen Code 12 umfasst, sollte so auf dem Förderband 24 positioniert am Codeleser 2 vorbeifahren, dass der vorgegebene Bereich 16 den Code 12 vollständig umfasst. Ist dies der Fall, so kann der Code 12 durch den erweiterten Lesebereich 30 des Codelesers 2, welcher durch die zweite 10 und dritte 11 Scanlinie begrenzt ist, ausgelesen werden, und zwar so, dass alle Scanlinien 28, 10, 11 Code 12 erfassen. Ist jedoch wie in Fig. 5 gezeigt, der Code 12 außerhalb des vorgegebenen Bereichs 16 positioniert, so wird der Code 12 nur durch die in diesem hier skizzierten Fall erste 28 und dritte 11 Scanlinie erkannt. Bei einer solchen Fehlpositionierung gibt die Auswerteeinheit bevorzugt nicht nur einen Hinweise, dass sich der Code 12 außerhalb des vorgegebenen Bereichs 16 befindet, i.S. einer "O*ut of Sight"* Funktion, sondern zusätzlich auch einen Korrekturhinweise, der durch einen Pfeil im Display angedeutet sein kann. In diesem hier skizzierten Fall weist der Pfeil den Benutzer darauf hin, dass sich der Code 12 auf dem Paket 18 unterhalb des vorgegebenen Bereichs 16 befindet. Mit anderen Worten, der Benutzer wird nicht nur darauf hingewiesen, dass der Code 12 falsch positioniert und damit mangelhaft gelesen wird, sondern bevorzugt auch darauf, wie der Benutzer den Codeleser 2 neu ausrichten, bzw. justieren muss, um den vorgegebenen Bereich 16, bzw. den erweiterten Lesebereich 30 des Codelesers 2, mit der Position des Code 12 zur Übereinstimmung zu bringen.

### Liste der Bezugszeichen

- 1: Spiegelrad, Polygonrad
- 2: Optoelektronischer Codeleser
- 3: N Spiegelflächen
- 4: K Spiegelflächen
- 5: L Spiegelflächen
- 6: Lichtquelle
- 7: Lichtempfänger
- 8: Verarbeitungseinheit
- 9: Erkennungseinheit
- 10: Zweite Scanlinie
- 11: Dritte Scanlinie
- 12: Code
- 13: Bedieneinheit
- 14: Sortieranlage
- 15: Bildschirm
- 16: Vorgegebener Bereich
- 17: Auswerteeinheit
- 18: Objekte, z.B. Pakete
- 19: Umlenkspiegel
- 20: Austrittsfenster
- 21: Kolimatorlinse
- 22: Empfangslinse
- 23: Sortieranlage
- 24: Förderband
- 25: Linienscanner
- 26: Rasterscanner
- 27: Oszillierender Scanner
- 28: Erste Scanlinie
- 29: Rasterlinien
- 30: Erweiterter Lesebereich
- 31: Drehachse

## Patentansprüche

1. Spiegelrad (1) für einen optoelektronischen Codeleser (2), insbesondere für einen Barcodeleser, **dadurch gekennzeichnet, dass**
N Spiegelflächen (3) zueinander gleich ausgerichtet sind, und dass
K Spiegelflächen (4) zueinander um einen Kippwinkel α gegen die gleich ausgerichteten Spiegelflächen (3) verkippt sind, und dass
L Spiegelflächen (5) um einen Kippwinkel β gegen die gleich ausgerichteten Spiegelflächen (3) verkippt sind, wobei
die Richtung der Verkippung durch den Kippwinkel β entgegengesetzt zur Richtung der Verkippung durch den Kippwinkel α ist.

2. Spiegelrad nach Anspruch 1, **dadurch gekennzeichnet, dass** die Verkippung der K Spiegelflächen (4) um den Kippwinkel α, der Verkippung der L Spiegelflächen (5) um den Kippwinkel β in der entgegengesetzten Richtung entspricht.

3. Spiegelrad nach Anspruch 1, **dadurch gekennzeichnet, dass** N = 8 Spiegelflächen (3) umfasst und das K = 1 (4) und L = 1 (5) Spiegelflächen umfasst.

4. Spiegelrad nach Anspruch 1, **dadurch gekennzeichnet, dass** die K'te Spiegelfläche (4) gegenüberliegend zur L'ten Spiegelfläche (5) im Spiegelrad (1) angeordnet ist, oder dass die K'te (4) Spiegelfläche neben der L'ten (5) Spiegelfläche im Spiegelrad (1) angeordnet ist.

5. Optoelektronischer Codeleser (2), insbesondere Barcodeleser, mit einer Lichtquelle (6), einem Lichtempfänger (7), einer Verarbeitungseinheit (8) und einem Spiegelrad (1) **dadurch gekennzeichnet, dass** N Spiegelflächen (3) zueinander gleich ausgerichtet sind, und dass K Spiegelflächen (4) zueinander um einen Kippwinkel α gegen die N gleich ausgerichteten Spiegelflächen (3) verkippt sind, und dass L Spiegelflächen (5) um einen Kippwinkel β gegen die N gleich ausgerichteten Spiegelflächen (3) verkippt sind, wobei die Richtung der Verkippung durch den Kippwinkel β entgegengesetzt zur Richtung der Verkippung durch den Kippwinkel α ist.

6. Optoelektronischer Codeleser nach Anspruch 5, **dadurch gekennzeichnet, dass** die Verarbeitungseinheit (8) eine Erkennungseinheit (9) umfasst, die eingerichtet ist festzustellen, ob eine zweite (10) und/oder eine dritte (11) Scanlinie Code (12) erfasst, wobei die zweite Scanlinie (10) durch die K Spiegelflächen (4) der um den Kippwinkel α verkippten Spiegelflächen (4) erzeugt ist und die dritte Scanlinie (11) durch die L Spiegelflächen (5) der um den Kippwinkel β verkippten Spiegelflächen (5).

7. Optoelektronischer Codeleser nach Anspruch 6, **dadurch gekennzeichnet, dass** die Erkennungseinheit (9) eingerichtet ist ein Signal bereitzustellen, wobei das Signal anzeigt, ob die zweite (10) und/oder die dritte (11) Scanlinie Code (12) erfasst.

8. Bedieneinheit (13), insbesondere zur Verwendung in einer Sortieranlage (14), **dadurch gekennzeichnet, dass** die Bedieneinheit (13) eingerichtet ist ein Signal einer Erkennungseinheit (9) eines optoelektronischen Codelesers (2) zu empfangen, wobei das Signal anzeigt, ob eine zweite (10) und/oder eine dritte (11) Scanlinie Code (12) erfasst, wobei die zweite Scanlinie (10) durch K Spiegelflächen (4) der um einen Kippwinkel α verkippten Spiegelflächen (4) eines Spiegelrads (1) des optoelektronischen Codelesers (2) erzeugt ist und die dritte Scanlinie (11) durch L Spiegelflächen (5) der um einen Kippwinkel β verkippten Spiegelflächen (5) des Spiegelrads (1), und die Bedieneinheit (13) ferner eingerichtet ist, insbesondere auf einem Bildschirm (15), anzuzeigen, ob der Code (12) innerhalb eines vorgegebenen Bereichs (16) positioniert ist, indem eine Auswerteeinheit (17) der Bedieneinheit (13) auswertet, ob die zweite (10) und/oder die dritte (11) Scanlinie Code (12) erfasst.

9. System zum Sortieren von Objekten (18) aufweisend mindestens einen optoelektronischen Codeleser (2) nach Anspruch 5 und eine Bedieneinheit (13) nach Anspruch 8.

10. Verfahren zum Herstellen eines Spiegelrads (1) für einen optoelektronischen Codeleser (2), aufweisend die folgenden Schritte:
- Bereitstellen eines Spiegelrads (1) mit N Spiegelflächen (3), die zueinander gleich ausgerichtet sind;
- Verkippen von K weiteren Spiegelflächen (4) des Spiegelrads (1) um einen Kippwinkel α gegen die gleich ausgerichteten N Spiegelflächen (3);
- Verkippen von L weiteren Spiegelflächen (5) des Spiegelrads (1) um einen Kippwinkel β gegen die gleich ausgerichteten Spiegelflächen (3), wobei die Richtung der Verkippung durch den Kippwinkel β entgegengesetzt zur Richtung der Verkippung durch den Kippwinkel α erfolgt.

## Geänderte Patentansprüche

### Geänderte Patentansprüche gemäss Regel 137(2) EPÜ.

1. Spiegelrad (1) für einen optoelektronischen Codeleser (2), insbesondere für einen Barcodeleser, wobei
N Spiegelflächen (3) zueinander gleich ausgerichtet sind, so dass eine Flächennormale einer jeweiligen Spiegelfläche (3) der N-Spiegelflächen (3) senkrecht zu einer Zylinderachse des Spiegelrads verläuft, und dass K Spiegelflächen (4) zueinander um einen Kippwinkel α gegen die gleich ausgerichteten Spiegelflächen (3), gegen die Richtung der Zylinderachse verkippt sind, und dass
L Spiegelflächen (5) um einen Kippwinkel β gegen die gleich ausgerichteten Spiegelflächen (3), gegen die Richtung der Zylinderachse verkippt sind, wobei die Richtung der Verkippung gegen die Richtung der Zylinderachse durch den Kippwinkel β entgegengesetzt zur Richtung der Verkippung gegen die Richtung der Zylinderachse durch den Kippwinkel α ist.

2. Spiegelrad nach Anspruch 1, **dadurch gekennzeichnet, dass** die Verkippung der K Spiegelflächen (4) um den Kippwinkel α, der Verkippung der L Spiegelflächen (5) um den Kippwinkel β in der entgegengesetzten Richtung entspricht.

3. Spiegelrad nach Anspruch 1, **dadurch gekennzeichnet, dass** N = 8 Spiegelflächen (3) umfasst und das K = 1 (4) und L = 1 (5) Spiegelflächen umfasst.

4. Spiegelrad nach Anspruch 1, **dadurch gekennzeichnet, dass** die K'te Spiegelfläche (4) gegenüberliegend zur L'ten Spiegelfläche (5) im Spiegelrad (1) angeordnet ist, oder dass die K'te (4) Spiegelfläche neben der L'ten (5) Spiegelfläche im Spiegelrad (1) angeordnet ist.

5. Optoelektronischer Codeleser (2), insbesondere Barcodeleser, mit einer Lichtquelle (6), einem Lichtempfänger (7), einer Verarbeitungseinheit (8) und einem Spiegelrad (1) **dadurch gekennzeichnet, dass** N Spiegelflächen (3) zueinander gleich ausgerichtet sind, so dass eine Flächennormale einer jeweiligen Spiegelfläche (3) der N-Spiegelflächen (3) senkrecht zu einer Zylinderachse des Spiegelrads verläuft, und dass K Spiegelflächen (4) zueinander um einen Kippwinkel α gegen die N gleich ausgerichteten Spiegelflächen (3), gegen die Richtung der Zylinderachse verkippt sind, und dass L Spiegelflächen (5) um einen Kippwinkel β gegen die N gleich ausgerichteten Spiegelflächen (3), gegen die Richtung der Zylinderachse verkippt sind, wobei die Richtung der Verkippung gegen die Richtung der Zylinderachse durch den Kippwinkel β entgegengesetzt zur Richtung der Verkippung gegen die Richtung der Zylinderachse durch den Kippwinkel α ist.

6. Optoelektronischer Codeleser (2) nach Anspruch 5, **dadurch gekennzeichnet, dass** die Verarbeitungseinheit (8) eine Erkennungseinheit (9) umfasst, die eingerichtet ist festzustellen, ob eine zweite (10) und/oder eine dritte (11) Scanlinie Code (12) erfasst, wobei die zweite Scanlinie (10) durch die K Spiegelflächen (4) der um den Kippwinkel α verkippten Spiegelflächen (4) erzeugt ist und die dritte Scanlinie (11) durch die L Spiegelflächen (5) der um den Kippwinkel β verkippten Spiegelflächen (5).

7. Optoelektronischer Codeleser (2) nach Anspruch 6, **dadurch gekennzeichnet, dass** die Erkennungseinheit (9) eingerichtet ist ein Signal bereitzustellen, wobei das Signal anzeigt, ob die zweite (10) und/oder die dritte (11) Scanlinie Code (12) erfasst.

8. System zum Sortieren von Objekten (18) aufweisend mindestens einen optoelektronischen Codeleser (2) nach Anspruch 5 und eine Bedieneinheit (13), wobei die Bedieneinheit (13) eingerichtet ist, ein Signal einer Erkennungseinheit (9) eines optoelektronischen Codelesers (2) nach Anspruch 6 zu empfangen, wobei das Signal anzeigt, ob eine zweite (10) und/oder eine dritte (11) Scanlinie Code (12) erfasst.

9. Verfahren zum Herstellen eines Spiegelrads (1) für einen optoelektronischen Codeleser (2), aufweisend die folgenden Schritte:
- Bereitstellen eines Spiegelrads (1) mit N Spiegelflächen (3), die zueinander gleich ausgerichtet sind;
- Verkippen von K weiteren Spiegelflächen (4) des Spiegelrads (1) um einen Kippwinkel α gegen die gleich ausgerichteten N Spiegelflächen (3);
- Verkippen von L weiteren Spiegelflächen (5) des Spiegelrads (1) um einen Kippwinkel β gegen die gleich ausgerichteten Spiegelflächen (3), wobei die Richtung der Verkippung durch den Kippwinkel β entgegengesetzt zur Richtung der Verkippung durch den Kippwinkel α erfolgt.
